(19) **Europäisches Patentamt European Patent Office Office européen des brevets**

(11) **EP 2 608 196 B1**

(12) **EUROPEAN PATENT SPECIFICATION**

(45) Date of publication and mention of the grant of the patent:
**16.07.2014 Bulletin 2014/29**

(51) Int Cl.:
*G10L 15/28* (2013.01)     *G10L 15/06* (2013.01)

(21) Application number: **11194930.1**

(22) Date of filing: **21.12.2011**

(54) **Combinatorial method for generating filler words**

Kombinatorisches Verfahren zur Erzeugung von Füllwörtern

Procédé combinatoire pour la génération de mots explétifs

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.06.2013 Bulletin 2013/26**

(73) Proprietor: **Institut Telecom - Telecom Paristech 75014 Paris (FR)**

(72) Inventor: **SARMENTO CAON, Daniel Régis 29055-590 VITORIA (BR)**

(74) Representative: **Tanty, François**
**Cabinet Nony**
**3, rue de Penthièvre**
**75008 Paris (FR)**

(56) References cited:
**EP-A1- 2 221 806**     **US-A1- 2001 016 814**

- **DIETRICH KLAKOW ET AL: "OOV-DETECTION IN LARGE VOCABULARY SYSTEM USING AUTOMATICALLY DEFINED WORD-FRAGMENTS AS FILLERS", EUROSPEECH, vol. 1, 5 September 1999 (1999-09-05), pages 49-52, XP007000912,**
- **YAMADA M ET AL: "ACTIVE/NON-ACTIVE WORD CONTROL USING GARBAGE MODEL - UNKNOWN WORD RE-EVALUATION IN SPEECH CONVERSATION", ICSLP 94 : 1994 INTERNATIONAL CONFERENCE ON SPOKEN LANGUAGE PROCESSING. YOKOHAMA, JAPAN, SEPT. 18 - 22, 1994; [INTERNATIONAL CONFERENCE ON SPOKEN LANGUAGE PROCESSING. (ICSLP)], YOKOHAMA : ASJ, JP, vol. 2, 18 September 1994 (1994-09-18), pages 823-826, XP000855376,**

## Description

The present invention relates to methods of handling out-of-vocabulary words for automatic speech recognition systems.

The purpose of speech recognition systems can be to train a system to understand a user's voice; to store discrete speech such as a spoken nametag or a spoken control word, like a numeral or a key-word; or to use the recognition system to have the user's speech recognized and used for some useful end purpose such as voice dialing, menu navigation, transcription, or the like.

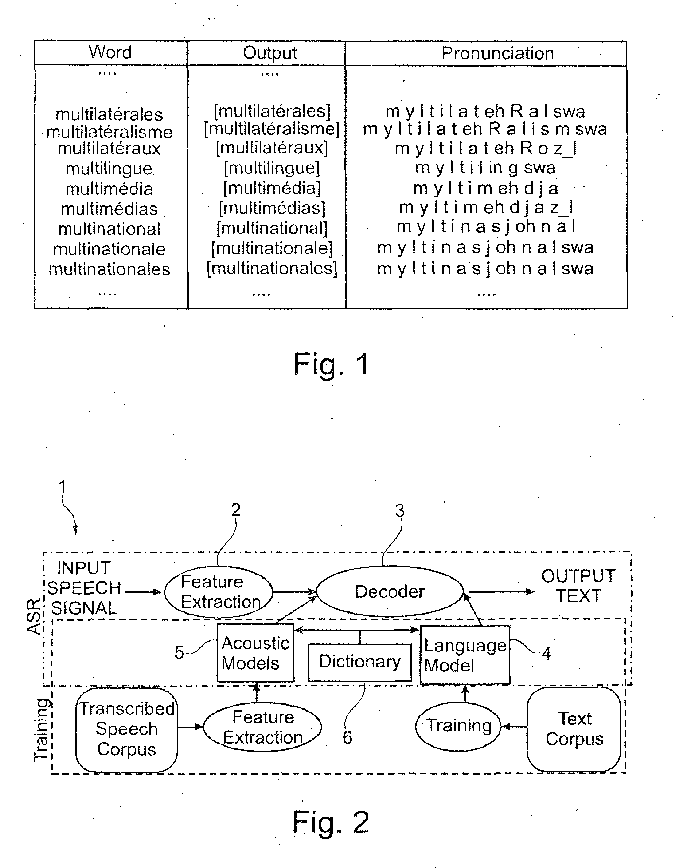

The role of speech recognition systems is to output the most likely combination of words spoken by the user. Based on this output, a dialogue manager can determine the meanings and actions to trigger using semantics, for example. To achieve this goal, such systems need a list of possible words to recognize, i.e. the "in-vocabulary" words. Such a list is typically stored in a dictionary containing the words, spelling and possible variations of pronunciation, particularly when some words may be linked. The dictionary allows making the link between the sounds, from which the extracted features are learned and kept in the acoustic models, and the language model probabilities. An example of part of a dictionary for French words is shown in Figure 1.

A well-known way of building a new dictionary is to extract the most frequent words from a large amount of text. The size of the dictionary in common speech recognition systems, called "*large vocabulary*", is usually around sixty-five thousand words. A word which is not in the dictionary will not typically be recognized.

The language model of a speech recognition system allows representing the behavior of a language, by determining for example if a sentence is acceptable or not, considering the modeled language. Language models can be deterministic, using linguistic information contained in grammar rules, or stochastic, using statistical information.

Usually, linguistic knowledge is used to build the language model, using the structure of a sentence to validate the conditions of acceptance. Spoken language, however, has a spontaneous aspect which usually requires manual intervention regarding sentence construction. The type of speech, for example read texts, telephone dialogues, interviews, news broadcasts, meetings, etc. can influence the spoken language in a way not foreseen by the linguistic knowledge.

Stochastic models are learned automatically through the use of very large texts, e.g. texts containing millions of words. A modelization, able to estimate automatically, thanks to the text, the probabilities for sequences containing n words is often used and called the n-gram modelization. The frequency for each sequence that appears will set the probabilities for 1-gram (probability of one word to appear in sequence), 2-gram (probability of two specific words appearing in sequence) and continuously to n-gram, "n" being previously set as the maximum number of words in a sequence.

A speech can contain some unexpected inputs, as for example hesitation, mumbling, coughing, and or noise caused by sounds of paper, table, or applause. These inputs are called out-of-vocabulary words, and are of course not contained in the grammar used for speech recognition. These inputs can lead to a false detection of in-vocabulary words, creating false alarms. Out-of-vocabulary words thus should be filtered or modeled.

Well-known automatic speech recognition (ASR) systems, as for example the large vocabulary continuous speech recognition engine *Julius*, can use deterministic finite automatons (DFA) or statistical probabilities, like n-grams, as a language model. Both are lacking an out-of-vocabulary word handling. It is known that a DFA with only one word will force the speech input to always match this word.

The *Twentee corpus phonetic list*, based on the Dutch language, contains words with only consonants that are used to deal with noise inputs. However, the Twentee corpus dictionary does not contain a sufficient number of "artificial" words to handle many input variations.

Acoustic modeling methods, for example Gaussian mixture models or algorithms measuring the similarity between two sequences varying in time or speed, called dynamic time warping methods, can also deal with noise input, but may need acoustic information *a priori*, in order to have desirable and representative data.

It is known from international application WO 2004/111998 to use phoneme segmentation in order to improve the rejection of out-of-vocabulary words. However, not all sounds can be fit into this forced phoneme alignment, and spaces remain for potentially incorrect segmentations.

It is also known from the patent application US 2007/0265849 to use two different grammars to determine if the input speech is out-of-vocabulary. However, grammar may not be complete, that is to say free of out-of-vocabulary words, due to the substantial linguistic knowledge involved.

One method to treat out-of vocabulary words consists of adding as many words as possible to the dictionary used for the speech recognition, but some sounds will not typically perfectly match a phonetic representation. Artificial words have been used, but not with desirable word generation.

Examples of such methods are provided in US 2001/016814 A1 and in "OOV-detection in large vocabulary system using automatically defined word-fragments as fillers" by Klakow et al., Proceedings EUROSPEECH, 5 September 1999, respectively.

There is thus a need to improve handling of out-of-vocabulary words.

One object of the invention, according to a first of its aspects, is a speech recognition system for creating an output text from an input speech signal, comprising a dictionary including in-vocabulary words and fillers, said fillers being formed by a predetermined number of language elements arranged in a combinatorial manner, each filler enabling treatment of input speech signals not corresponding to in-vocabulary words by representation as a predetermined string of language elements. Thus, out-of-vocabulary words can be more easily processed.

"Arranged in a combinatorial manner" means that the elements are combined according to a combinatory rule or according to some predetermined arrangements, for example permutations between the order of the elements, starting an end of the string of elements, for example. Accordingly, the combinations may comprise repetitions and/or not. The use of repetitions is advantageous as it allows more combinations with a given number of language elements, requiring however more memory and processing time. This combinatorial method is much more intensive than currently known methods.

If repetition is not allowed and order is important, the total number of fillers that can be generated for a given number of different language elements is:

$$C\,(n,r) = n!/(n-r)!,$$

where n is the number of different used language elements and r the length of the artificial words.

The fact that fillers are generated in a combinatorial manner allows generation of a large number of fillers covering most unrecognized sounds. It avoids matching existing words of the target language.

The dictionary may include at least one thousand fillers, better at least ten thousands fillers, even better at least one hundred thousand fillers, or more.

Language elements may be based on modeled acoustic units, that is to say extracted from hidden Markov models list, such as phonemes, for example. Language elements may be phonetic symbols, such as monophones, for example, as defined in the Speech Assessment Methods Phonetic Alphabet (SAMPA) based on the International Phonetic Alphabet (IPA).

The invention adds robustness to speech recognition systems by limiting problems associated with out-of-vocabulary words, and by creating a sufficient number of fillers, that is to say artificial words, to match the cases where no in-vocabulary word could match. These artificial words should not match, even partially, an existing spoken word. The artificial words added to the dictionary are used as simple filters for the unexpected inputs. Fillers can be processed by a dialogue manager as having no meaning.

The method according to the invention permits maintaining a restricted dictionary of in-vocabulary words, implying a reduced language model.

The predetermined number of language elements for forming the fillers may be equal to at least five, better six, even better seven. The number of language elements used for forming the fillers may depend on the capacity of the processor and/or memory of the speech recognition system.

The language elements chosen for forming the fillers may be typically non-consecutive elements of the modeled language, that is to say elements that, at least when there are several of them, are usually non-consecutive in the same word.

In one embodiment of the invention, the language elements may be consonants. For example, in most Latin based languages words composed by more than four consecutive consonant sounds do not generally exist.

In other embodiments, more suitable for languages other than Latin based languages, for example, the language elements chosen for forming the fillers may be other elements that are not consecutive in the modeled language.

The input speech signal may be transformed into acoustic features by a feature extraction module of the speech recognition system according to the invention.

The speech recognition system according to the invention may further comprise a decoder, such as those of known methods, which uses models based on the dictionary. These models may include acoustic models and a language model, which may be stochastic.

After fillers have been added to the dictionary, they may be treated by the decoder as unknown words, tagged, for example, by <unk>, having probabilities set by the language model, inside the n-grams.

The fillers may be recognized during input speech signed processing and may have the same probability of identification as any other unknown word. The presence of a filler, for example in the first hypothesis, means that there was noise, bad pronunciation or out-of-vocabulary words in general in the input speech signal. By "first hypothesis", one means with the highest probability of identification. The fillers may not be associated with specific sounds. When entered in the dictionary, each filler may have been considered to have as many pronunciations as could be generated, having one single linguistic probability of being spoken.

Statistical models, such as hidden Markov models, which are rarely consecutive, for example in rows of more than four phonemes learned by consonants, may be used to generate the fillers to be added to the dictionary. Each hidden Markov model may represent a phoneme or a specific noise. In this case, the hidden Markov models of consonants may be used in a combinatorial manner, by changing the dictionary and, if desired, by adjusting the probabilities at the n-grams, to add robustness to the speech recognition system.

After the execution of the speech recognition system according to the invention, a dialogue manager can conclude the meanings and actions to trigger, using semantics for example.

Another object of the invention is a method of creating a dictionary for a speech recognition system as defined above, the method comprising:

- creating a list of in-vocabulary words,
- generating fillers by arranging in a combinatorial manner a predetermined number of language elements, and
- adding said fillers to the list of in-vocabulary words to create the dictionary. Another object of the invention is a method of handling out-of-vocabulary words for the speech recognition system previously defined, for example in real-time, the method comprising:
- determining if an input speech signal matches an in-vocabulary word and if not associating the input speech signal with a filler of the dictionary.

If the filler matches the signal better than an in-vocabulary word, the system is still capable of outputting the best sequence of language elements that were matched. The matches may occur by maximum likelihood of the existent acoustic features multiplied by language probabilities.

This method does not depend on any new acoustic model training and is based only on the dictionary used in the speech recognition system.

The invention will be better understood on reading the following detailed description of non-limiting exemplary embodiments thereof and on examining the appended drawings in which:

- Figure 1 is an example of part of a dictionary according to the state-of-the-art;
- Figure 2 is a schematic representation of a speech recognition system according to embodiments of the invention; and
- Figure 3 is an embodiment of part of a dictionary according to the invention.

The speech recognition system 1 according to an embodiment of the invention shown in Figure 2 receives the input speech signal from an acoustic device not shown, such as a microphone.

A feature extraction module 2 is used to parse streams of the input speech signal into parametric representations, called acoustic features.

The speech recognition system 1 comprises a decoder 3 for decoding the acoustic features to obtain the output data corresponding to the input speech signal and transcribe the output text. Two models are used as input to the decoder 3.

First, language model 4 provides rules governing which words can logically follow other words to form valid sentences. The language model 4 is stochastic, that is to say it uses statistical information. The language model 4 benefits from training based on text corpuses.

In another embodiment, language model 4 may be deterministic, using a grammar and a dictionary.

Second, acoustic models 5 assist with selection of most likely words corresponding to input from the feature extraction module 2. Acoustic models 5 benefits from feature extraction in transcribed speech corpuses.

The decoder 3 compares and contrasts the acoustic features of a word to be recognized, extracted by the module 2, with stored word models, assesses the magnitude of the differences or similarities therebetween, and ultimately chooses a match from the models as the recognized word.

A dictionary 6 allows making the link between the acoustic models 5 and the language model 4.

The dictionary 6 according to the invention includes in-vocabulary words and fillers.

The fillers are formed by a predetermined number of language elements arranged in a combinatorial manner, and allow the handling of out-of-vocabulary words, corresponding to unexpected inputs of the input speech signal, such as for example, mumbling, coughing, or noises.

The dictionary 6 includes at least one thousand fillers.

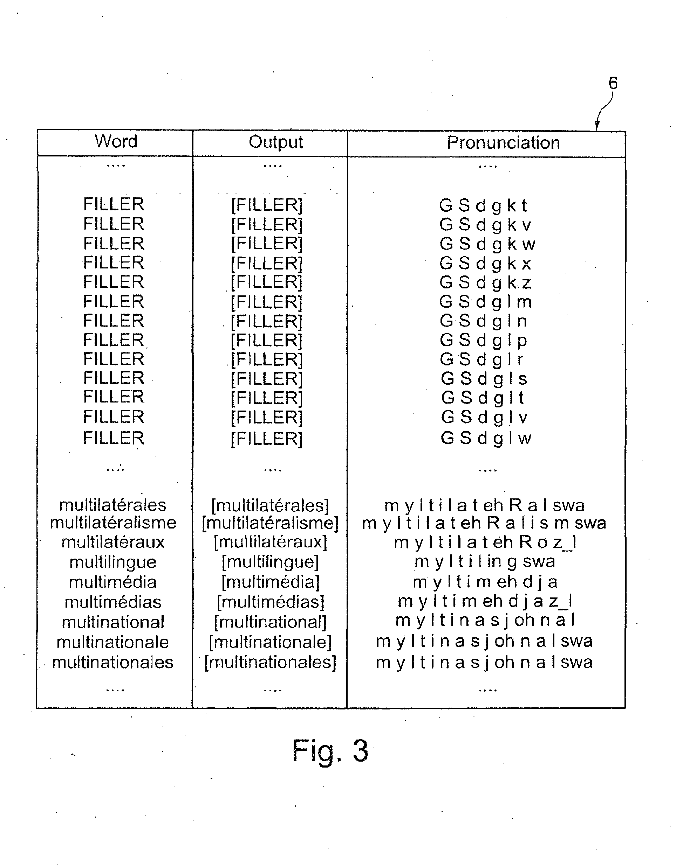

An exemplary part of a dictionary 6 according to the invention, for French words, is shown at Figure 3. "*multilatérales, multilatéralisme, multilateraux, etc.*" are in-vocabulary words. Some fillers precede the list of in-vocabulary words such as "GSdglw" and "GSdglv".

Preferably, the predetermined number of language elements used for forming the fillers is at least five, for example six, as in the considered embodiment.

In this embodiment, the chosen language elements are consonants like G, S, D, K, T. Indeed, it is not common to find a word, in Latin based languages, that contains more than four consecutive consonants. That way, the fillers should not match an existing in-vocabulary word, and can be used as filters for the inevitable out-of-vocabulary words of the input speech.

For selecting which filler is inserted when no in-vocabulary word is found, the system applies algorithms like Viterbi or A* algorithms.

Example

In this example, the dictionary 6 of the speech recognition system 1 according to the invention only contains digits and some fillers.

The input speech signal received by the module of feature extraction 2 is "one two <cough> three".

The sound <cough>, corresponding to an out-of-vocabulary word, is not recognized by the system 1 and is matched by the filler with higher acoustic likelihood because the linguistic probabilities are the same for all fillers. The acoustic likelihood is not always matching closest match to the input signal, because the final hypothesis is chosen by the multiplication of acoustic and language probabilities. Thus the language probabilities should also permit consideration of a filler as a hypothesis.

The output text delivered by the decoder 3 is thus "one two FILLER three".

In a next speech input signal, a different unrecognized sound may be associated with a different filler. After the addition of the fillers to the dictionary, the rules for filler selection are the same as the rules for in-vocabulary words, and are affected by the language model and acoustic model probabilities.

The method of handling out-of-vocabulary words according to the invention can be realized in real-time.

All known acoustic methods are complementary to the invention to deal with out-of-vocabulary words. The method of handling out-of-vocabulary words according to the invention can be easily applied to these methods.

Such a method can also be used in key-word spotting systems, or in any pattern recognition systems.

The expression "comprising a" or "including a" must be understood as being synonymous with "comprising at least one" or "including at least one", unless specified otherwise.

The invention is not limited to the examples that have just been described. In particular, features from the embodiments illustrated may be combined within embodiments that are not illustrated.

**Claims**

1. Speech recognition system (1) for creating an output text from input speech signals, comprising a dictionary (6) including in-vocabulary words and fillers, said fillers being generated by a predetermined number of language elements arranged in a combinatorial manner, each filler enabling treatment of input speech signals not corresponding to in-vocabulary words by representation as a predetermined string of language elements.

2. Speech recognition system according to claim 1, wherein the dictionary (6) includes at least one thousand fillers.

3. Speech recognition system according to claim 1 or 2, wherein the predetermined number of language elements used for forming the fillers is at least equal to five, better six, even better seven.

4. Speech recognition system according to any one of claims 1 to 3, wherein the language elements are typically non-consecutive elements of the modeled language.

5. Speech recognition system according to any one of the preceding claims, wherein the language elements are consonants.

6. Speech recognition system according to any one of the preceding claims, wherein the input speech signal is transformed into acoustic features by a feature extraction module (2).

7. Speech recognition system according to any one of the preceding claims, wherein the system (1) further comprises a decoder (3) which uses models based on the dictionary (6).

8. Method of creating a dictionary (6) for a speech recognition system (1), the method comprising:

   - creating a list of in-vocabulary words,
   - generating fillers by arranging in a combinatorial manner a predetermined number of language elements, and
   - adding said fillers to the list of in-vocabulary words to create the dictionary (6).

9. Method of creating a dictionary according to claim 8, in which at least one thousand fillers are generated and added to the dictionary (6).

10. Method of creating a dictionary according to claim 8 or 9, in which the predetermined number of language elements for forming the fillers is at least equal to five, better six, even better seven.

11. Method of creating a dictionary according to any one of claims 8 to 10, in which the language elements are usually non-consecutive elements of the modeled language, preferably consonants.

12. Method of handling out-of-vocabulary words for a speech recognition system (1) as defined in claims 1 to 7, the method comprising:

   - determining if an input speech signal matches an in-vocabulary word and if not associating the input speech signal with a filler of the dictionary.

**Patentansprüche**

1. Spracherkennungssystem (1) zum Erzeugen eines Ausgangstexts von Eingangssprachsignalen, umfassend ein Wörterbuch (6), das In-Vocabulary-Wörter und Füllwörter umfasst, wobei die Füllwörter durch eine vorbestimmte Anzahl von Sprachelementen, die in einer kombinatorischen Weise angeordnet sind, erstellt werden, wobei jedes Füllwort eine Bearbeitung von Eingangssprachsignalen, die nicht In-Vocabulary-Wörtern entsprechen, durch die Darstellung als eine vorbestimmte Reihung von Sprachelementen ermöglicht.

2. Spracherkennungssystem nach Anspruch 1, wobei das Wörterbuch (6) mindestens eintausend Füllwör-

**3.** Spracherkennungssystem nach Anspruch 1 oder 2, wobei die vorbestimmte Anzahl von Sprachelementen, die zur Bildung der Füllwörter verwendet wird, mindestens gleich fünf, besser sechs, noch besser sieben beträgt.

**4.** Spracherkennungssystem nach einem der Ansprüche 1 bis 3, wobei die Sprachelemente normalerweise nicht-aufeinanderfolgende Elemente der modellierten Sprache sind.

**5.** Spracherkennungssystem nach einem der vorhergehenden Ansprüche, wobei die Sprachelemente Konsonanten sind.

**6.** Spracherkennungssystem nach einem der vorhergehenden Ansprüche, wobei das Eingangssprachsignal durch ein Merkmalsextraktionsmodul (2) in akustische Merkmale transformiert wird.

**7.** Spracherkennungssystem nach einem der vorhergehenden Ansprüche, wobei das System (1) weiter einen Decoder (3) umfasst, der Modelle verwendet, die auf dem Wörterbuch (6) basieren.

**8.** Verfahren zum Erzeugen eines Wörterbuchs (6) für ein Spracherkennungssystem (1), wobei das Verfahren umfasst:

- Erzeugen einer Liste von In-Vocabulary-Wörtern,
- Erstellen von Füllwörtern durch Anordnen einer vorbestimmten Anzahl von Sprachelementen in einer kombinatorischen Weise, und
- Hinzufügen der Füllwörter zu der Liste von In-Vocabulary-Wörtern, um das Wörterbuch (6) zu erzeugen.

**9.** Verfahren zum Erzeugen eines Wörterbuchs nach Anspruch 8, wobei mindestens eintausend Füllwörter erstellt und zu dem Wörterbuch (6) hinzugefügt werden.

**10.** Verfahren zum Erzeugen eines Wörterbuchs nach Anspruch 8 oder 9, wobei die vorbestimmte Anzahl von Sprachelementen zur Bildung der Füllwörter mindestens gleich fünf, besser sechs, noch besser sieben beträgt.

**11.** Verfahren zum Erzeugen eines Wörterbuchs nach einem der Ansprüche 8 bis 10, wobei die Sprachelemente normalerweise nicht-aufeinanderfolgende Elemente der modellierten Sprache, vorzugsweise Konsonanten, sind.

**12.** Verfahren zur Handhabung von Out-Of-Vocabulary-Wörtern für ein Spracherkennungssystem (1) wie in den Ansprüche 1 bis 7 definiert, wobei das Verfahren umfasst:

- Bestimmen, ob ein Eingangssprachsignal einem In-Vocabulary-Wort entspricht und wenn nicht, Verbinden des Eingangssprachsignals mit einem Füllwort aus dem Wörterbuch.

**Revendications**

**1.** Système de reconnaissance vocale (1) permettant de créer un texte de sortie à partir de signaux vocaux d'entrée et comprenant un dictionnaire (6) contenant des mots du vocabulaire et des mots de remplissage, lesdits mots de remplissage étant générés par un nombre prédéterminé d'éléments de langage agencés de manière combinatoire, chaque mot de remplissage permettant le traitement des signaux vocaux d'entrée qui ne correspondent pas à des mots du vocabulaire par représentation en tant que chaîne prédéterminée d'éléments de langage.

**2.** Système de reconnaissance vocale selon la revendication 1, dans lequel le dictionnaire (6) comprend au moins un millier de mots de remplissage.

**3.** Système de reconnaissance vocale selon la revendication 1 ou 2, dans lequel le nombre prédéterminé d'éléments de langage utilisés pour former les mots de remplissage est au moins égal à cinq, mieux à six, mieux encore à sept.

**4.** Système de reconnaissance vocale selon l'une quelconque des revendications 1 à 3, dans lequel les éléments de langage sont des éléments généralement non consécutifs de la langue modélisée.

**5.** Système de reconnaissance vocale selon l'une quelconque des revendications précédentes, dans lequel les éléments de langage sont des consonnes.

**6.** Système de reconnaissance vocale selon l'une quelconque des revendications précédentes, dans lequel le signal vocal d'entrée est transformé en caractéristiques acoustiques par un module d'extraction de caractéristiques (2).

**7.** Système de reconnaissance vocale selon l'une quelconque des revendications précédentes, dans lequel le système (1) comprend en outre un décodeur (3) qui utilise des modèles basés sur le dictionnaire (6).

**8.** Procédé de création d'un dictionnaire (6) pour un système de reconnaissance vocale (1), le procédé comprenant :

- la création d'une liste de mots du vocabulaire,
- la génération de mots de remplissage par agencement de manière combinatoire d'un nombre prédéterminé d'éléments de langage, et
- l'ajout desdits mots de remplissage à la liste de mots du vocabulaire pour créer le dictionnaire (6).

9. Procédé de création d'un dictionnaire selon la revendication 8, dans lequel au moins un millier de mots de remplissage sont générés et ajoutés au dictionnaire (6).

10. Procédé de création d'un dictionnaire selon la revendication 8 ou 9, dans lequel le nombre prédéterminé d'éléments de langage destinés à former les mots de remplissage est au moins égal à cinq, mieux à six, mieux encore à sept.

11. Procédé de création d'un dictionnaire selon l'une quelconque des revendications 8 à 10, dans lequel les éléments de langage sont des éléments généralement non consécutifs de la langue modélisée, de préférence des consonnes.

12. Procédé de traitement de mots hors-vocabulaire pour un système de reconnaissance vocale (1) selon les revendications 1 à 7, le procédé comprenant :

> - la détermination du fait qu'un signal vocal d'entrée correspond ou non à un mot du vocabulaire et si ce n'est pas le cas, l'association du signal vocal d'entrée à un mot de remplissage du dictionnaire.

| Word | Output | Pronunciation |
|---|---|---|
| .... | .... | |
| multilatérales | [multilatérales] | m y l t i l a t eh R a l swa |
| multilatéralisme | [multilatéralisme] | m y l t i l a t eh R a l i s m swa |
| multilatéraux | [multilatéraux] | m y l t i l a t eh R o z_l |
| multilingue | [multilingue] | m y l t i l in g swa |
| multimédia | [multimédia] | m y l t i m eh d j a |
| multimédias | [multimédias] | m y l t i m eh d j a z_l |
| multinational | [multinational] | m y l t i n a s j oh n a l |
| multinationale | [multinationale] | m y l t i n a s j oh n a l swa |
| multinationales | [multinationales] | m y l t i n a s j oh n a l swa |
| .... | .... | .... |

## Fig. 1

## Fig. 2

6

| Word | Output | Pronunciation |
|---|---|---|
| .... | .... | .... |
| FILLER | [FILLER] | G S d g k t |
| FILLER | [FILLER] | G S d g k v |
| FILLER | [FILLER] | G S d g k w |
| FILLER | [FILLER] | G S d g k x |
| FILLER | [FILLER] | G S d g k z |
| FILLER | [FILLER] | G S d g l m |
| FILLER | [FILLER] | G S d g l n |
| FILLER | [FILLER] | G S d g l p |
| FILLER | [FILLER] | G S d g l r |
| FILLER | [FILLER] | G S d g l s |
| FILLER | [FILLER] | G S d g l t |
| FILLER | [FILLER] | G S d g l v |
| FILLER | [FILLER] | G S d g l w |
| .... | .... | .... |
| multilatérales | [multilatérales] | m y l t i l a t eh R a l swa |
| multilatéralisme | [multilatéralisme] | m y l t i l a t eh R a l i s m swa |
| multilatéraux | [multilatéraux] | m y l t i l a t eh R o z_l |
| multilingue | [multilingue] | m y l t i l in g swa |
| multimédia | [multimédia] | m y l t i m eh d j a |
| multimédias | [multimédias] | m y l t i m eh d j a z_l |
| multinational | [multinational] | m y l t i n a s j oh n a l |
| multinationale | [multinationale] | m y l t i n a s j oh n a l swa |
| multinationales | [multinationales] | m y l t i n a s j oh n a l swa |
| .... | .... | .... |

# Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2004111998 A
- US 20070265849 A

- US 2001016814 A1

### Non-patent literature cited in the description

- **KLAKOW et al.** OOV-detection in large vocabulary system using automatically defined word-fragments as fillers. *Proceedings EUROSPEECH,* 05 September 1999